Europäisches Patentamt

European Patent Office

Office européen des brevets

(19)

(11) Veröffentlichungsnummer: **0 027 097**
**A2**

## EUROPÄISCHE PATENTANMELDUNG

(12)

(21) Anmeldenummer: 80810153.9

(22) Anmeldetag: 07.05.80

(51) Int. Cl.³: **G 01 G 11/12**, B 29 F 3/00,
B 29 B 5/06

(30) Priorität: 05.10.79 CH 8999/79

(71) Anmelder: **K-TRON SODER AG, Mühlestrasse 96,
CH-5702 Niederlenz (CH)**

(43) Veröffentlichungstag der Anmeldung: 15.04.81
Patentblatt 81/15

(72) Erfinder: **Schreier, Hermann, Böllweg 19,
CH-5600 Lenzburg (CH)**
Erfinder: **Hauenstein, Hans, Kirchweg,
CH-5313 Klingnau (CH)**

(84) Benannte Vertragsstaaten: **AT DE FR GB IT NL**

(74) Vertreter: **Eder, Carl E. et al, Patentanwaltsbüro Eder &
Cie Münchensteinerstrasse 2, CH-4052 Basel (CH)**

(54) **Einrichtung zum Fördern, und insbesondere Dosieren, eines faserigen Gutes.**

(57) Die Einrichtung weist einen Behälter (115) zum Aufnehmen eines faserigen Gutes auf. Der Innenraum (117) des Behälters (115) ist auf einer Seite durch den Abschnitt (121b) eines Förderbandes (121) mit schaufelförmigen Mitnehmern (121c) begrenzt, der beim Betrieb Fasern von unten nach oben transportiert und dann abwirft. Die Einrichtung ermöglicht, kontinuierlich Fasern von einem sich im Behälter (115) befindenden Faservorrat gleichmäßig und ohne Klumpenbildung auszutragen und vorzugsweise mittels einer Waage (105) sowie einer Regelschaltung gewichtsmäßig zu dosieren, und zwar insbesondere auch bei relativ kleinen Förderleistungen.

-1-

K-Tron Soder AG, Niederlenz (Schweiz)

Einrichtung zum Fördern, und insbesondere Dosieren, eines faserigen Gutes

Die Erfindung betrifft eine Einrichtung gemäss dem Oberbegriff des Anspruches 1.

Bei gewissen Verfahren für die Herstellung von Kunststoffen mit Glasfaserverstärkung führt man einer Plastifiziervorrichtung, die etwa einen Schnecken-Extruder aufweisen kann, kontinuierlich Kunststoff-Körner und Glasfasern zu. Die letzteren werden dann in der Plastifiziervorrichtung kontinuierlich mit dem Kunststoff vermischt. Da das hergestellte Produkt jeweils eine bestimmte, vorgegebene Glasfaserkonzentration aufweisen soll, muss pro Zeiteinheit eine bestimmte Menge Glasfasern zugeführt werden.

Eine bekannte Einrichtung zum Fördern und Dosieren von Glasfasern weist einen Vorrats-Behälter für die Glasfasern auf, der sich nach unten trichterförmig verjüngt und an seinem untern Ende offen ist und also unten eine Austrittsöffnung hat. Unmittelbar unter dieser befindet sich ein von der Austrittsöffnung weg leicht nach unten geneigter Kanal, der beim Betrieb mit einem Vibrator geschüttelt wird. Unter dem untern Ende des Kanals befindet sich ein horizontal verlaufender Abschnitt des Förderbandes einer Bandwaage, ähnlich wie sie beispielsweise aus der schweizerischen Patentschrift 610 400 oder der dieser entsprechenden US-Patentschrift 4 114 708 bekannt ist. Die Bandwaage weist Mittel auf, um die sich auf einem Teil des horizontalen Förderband-Abschnittes befindenden Fasern zu wägen. Ferner sind Mittel vorhanden, um

15698
Zb/ro/Fall 3

-2-

die Geschwindigkeit des Förderbandes derart zu regeln, dass die mittlere Förderleistung, d.h. die mittlere, pro Zeiteinheit geförderte Menge aus dem Behälter kommender Fasern gleich einem vorgegebenen Wert wird.

Beim Betrieb dieser vorbekannten Einrichtung werden die sich im Bereich der Behälter-Austrittsöffnung befindenden Fasern durch die darüberliegenden Fasern zusammengedrückt. Dieses Zusammendrücken wird noch dadurch verstärkt, dass sich der Behälter zur Austrittsöffnung hin trichterförmig verjüngt. Die Fasern neigen daher beim Austreten aus dem Behälter zur Bildung von Klumpen. Dadurch wird die Gleichmässigkeit der Faserförderung beeinträchtigt. Die Bildung von Klumpen wirkt sich insbesondere dann sehr nachteilig aus, wenn die pro Zeiteinheit zuzuführende Fasermenge relativ klein ist und weniger als etwa 50 kg pro Stunde beträgt. Wenn beispielsweise eine Fasermenge von 720 Gramm pro Stunde gefördert werden sollte, entspricht dies einer Förderleistung von 0,2 g/s. Wenn nun die Fasern vom Förderband klumpenweise gefördert werden, können zwischen den einzelnen Faser-Klumpen Abschnitte des Förderbandes vorhanden sein, die keine oder nur relativ wenig Fasern tragen und transportieren. Die momentane Förderleistung schwankt also relativ stark um einen Mittelwert. Wenn die derart klumpenweise und ungleichmässig geförderten Fasern für die kontinuierliche Herstellung eines faserverstärkten Kunststoffes verwendet werden, ergibt sich auch im Endprodukt eine ungleichmässige Verteilung der Fasern.

Es ist ferner bekannt, für die Förderung und Dosierung von Fasern eine Einrichtung zu verwenden, die eine Differential-Waage aufweist, auf der ein sich nach unten trichterförmig verjüngender Vorrats-Behälter und ein Schneckenförderer steht. Das untere Ende des Vorrats-Be-

-3-

hälters mündet in den horizontalen Förder-Durchgang des
Schneckenförderers. Beim Betrieb werden Fasern aus dem
sich im Behälter befindenden Faservorrat zum Ausgang des
Schneckenförderers transportiert. Dabei wird mittels der
Differential-Waage periodisch das Gewicht des Behälters,
des Schneckenförderers und der sich im Behälter und
Schneckenförderer befindenden Fasern gewogen und die
pro Messzeitintervall erfolgende Gewichtsabnahme bestimmt.
Diese Gewichtsabnahme gibt dann ein Mass für die pro
Zeiteinheit geförderte Fasermenge. Mittels einer Regeleinrichtung wird die Schnecken-Drehzahl des Schneckenförderers derart geregelt, dass die mittlere, pro Zeiteinheit geförderte Fasermenge gleich einem vorgegebenen
Wert wird.

Auch bei dieser eine Differential-Waage und einen
Schneckenförderer aufweisenden, vorbekannten Einrichtung
entstehen insbesondere dort, wo die Fasern aus dem Vorrats-Behälter in den Förder-Durchgang des Schneckenförderers gelangen, häufig Faserklumpen. Diese vorbekannte
Einrichtung hat also ähnliche Nachteile, wie die vorher
beschriebene Einrichtung.

Die Erfindung hat sich nun die Aufgabe gestellt, eine
Einrichtung mit einem Behälter und Fördermitteln zu
schaffen, wobei die letzteren ermöglichen sollen, Fasern
von einem im Behälter vorhandenen Faser-Vorrat möglichst
ohne die Bildung von Klumpen und mit einer möglichst
konstanten und gleichmässigen Förderleistung weiter zu
transportieren.

Diese Aufgabe wird durch eine Einrichtung gelöst, die
gemäss dem Anspruch 1 ausgebildet ist.

Zweckmässige Ausgestaltungen der Erfindung ergeben sich

-4-

aus den abhängigen Ansprüchen.

Der Erfindungsgegenstand soll nun anhand in der Zeichnung dargestellter Ausführungsbeispiele näher erläutert werden. In der Zeichnung zeigen

die Figur 1   einen schematischen Vertikalschnitt durch eine Einrichtung zum Fördern und Dosieren eines faserigen Gutes, wobei gewisse Elemente nicht geschnitten wurden,

die Figur 2   eine Draufsicht auf die in der Figur 1 dargestellte Einrichtung, aber ohne die Elektronik-Einheit,

die Figur 3   einen Ausschnitt aus der Figur 1 mit einem Teil des Förderbandes, in grösserem Massstab,

die Figur 4   eine Ansicht auf den Behälter und das Förderband in der in der Figur 1 durch den Pfeil IV bezeichneten Blickrichtung, in grösserem Massstab und ohne die Haube,

die Figur 5   einen schematischen Vertikalschnitt durch eine Variante einer Einrichtung zum Fördern und Dosieren eines faserigen Gutes und

die Figur 6   einen Schnitt durch die Einrichtung entlang der Linie VI-VI der Figur 5.

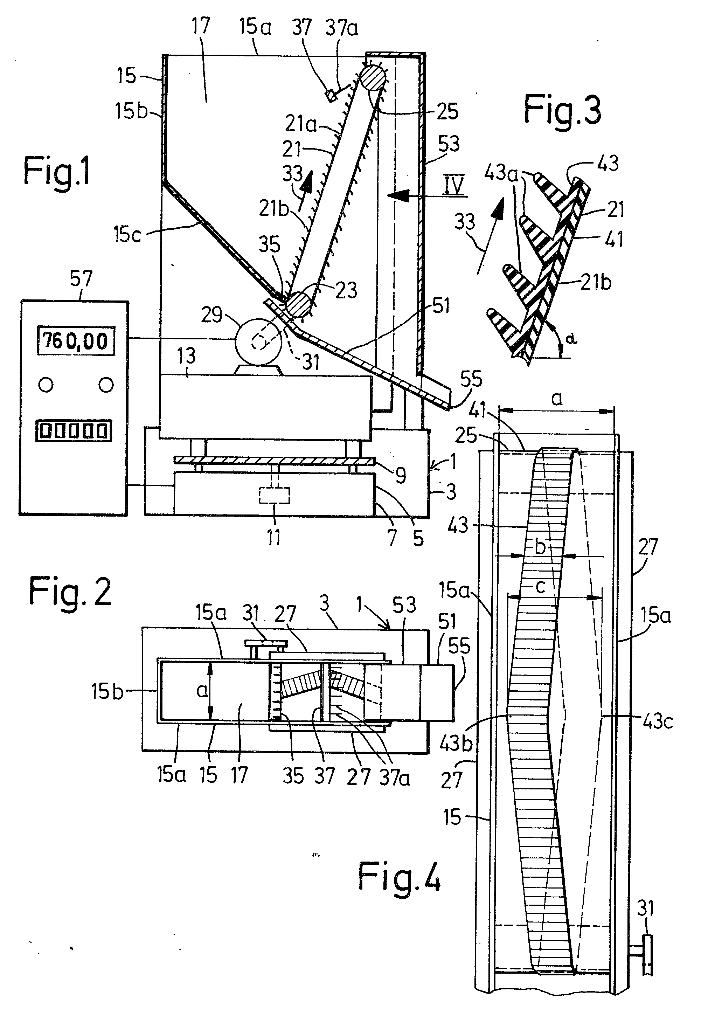

Die in die Figuren 1 und 2 schematisch dargestellte Einrichtung weist ein Gestell 1 mit einem Sockel 3 auf. Eine Waage 5 weist ein starr mit dem Sockel 3 verbundenes Gehäuse 7, einen bewegbar im letzteren gehaltenen Lastträger 9 und einen Last-Messwandler 11 auf, wobei der Lastträger 9 in Wirkverbindung mit dem Last-Messwandler 11 steht.

Der Lastträger 9 trägt einen oberhalb von ihm angeordneten Support 13. Am oberen Teil des Supports 13 ist ein als Ganzes mit 15 bezeichneter, oben offener Behälter zum Aufnehmen eines Vorrates eines faserigen Gutes befestigt. Der Innenraum 17 des Behälters 15 wird auf zwei gegenüberliegenden Seiten durch zwei vertikale Wände 15a begrenzt, von denen mindestens die Hauptteile eben und zueinander parallel sind. Auf der sich in den Figuren 1 und 2 links befindenden Seite ist der Behälter-Innenraum 17 durch eine ebene, vertikale Wand 15b begrenzt, die rechtwinklig zu den beiden Wänden 15a verläuft. Auf der sich in den Figuren 1 und 2 rechts befindenden Seite wird der Behälter-Innenraum 17 nicht durch eine starre Wand, sondern durch den Abschnitt 21a des Förderbandes 21 einer Fördervorrichtung begrenzt. Das Förderband 21 wird durch zwei Walzen 23 und 25 gehalten und geführt. Die Walzen sind in zwei Platten 27 gelagert, die entlang den Wänden 15a verlaufen und starr mit dem Support 13 verbunden sind. Die beiden Walzen sind um horizontale, zueinander parallele Drehachsen drehbar gelagert, wobei sich die Walze 25 höher oben als die Walze 23 befindet und knapp unter dem oberen Rand der Behälter-Wände 15a, 15b angeordnet ist. Im übrigen verlaufen die Drehachsen der beiden Walzen 23, 25 parallel zur Wand 15b, wobei aber die obere Walze 25 in horizontaler Richtung gemessen weiter von der Wand 15b entfernt ist als die untere Walze 23. Der sich zwischen den beiden Walzen 23 und 25 befindende Teil-Abschnitt 21b des Förderbandes-Abschnittes 21a verläuft entlang einer Ebene, die gegen eine Horizontalebene unter dem in der Figur 3 eingezeichneten Winkel $\alpha$ von unten nach oben von der gegenüberstehenden Wand 15b weg geneigt ist. Der Winkel $\alpha$ beträgt mindestens 45°, und vorzugsweise mindestens 65°. Er kann beispielsweise zwischen 70° und 75° betragen. Ein am Support 13 befestigter Elektromotor 29 ist über ein Riemen- oder Kettengetriebe 31 mit der Walze 23 verbunden und treibt diese beim Betrieb derart an, dass der Förderband-Abschnitt 21a in der durch einen Pfeil bezeichneten Förder-Richtung 33 schräg von unten nach oben bewegt wird.

Der Behälter-Innenraum 17 wird auf seiner untern Seite durch den Behälter-Boden 15c begrenzt. Dieser wird durch eine ebene Platte gebildet, die vom untern Ende der Wand 15b weg nach unten gegen die Walze 23 geneigt ist. Am untern Rand des Bodens 15c ist eine Lippe 35 aus elastisch deformierbarem Material, etwa aus einem gummielastischen Kunststoff, befestigt. Die Lippe 35 ist durch Einschnitte in eine Anzahl Zungen unterteilt, deren freie Enden am Förderband 21 anliegen.

Ein Abstreifer 37 ist etwas unter dem oberen Rand der Wände 15a in der Nähe der Walze 25 im Behälter-Innenraum 17 befestigt. Der Abstreifer 37 ist rechenartig ausgebildet und weist einen parallel zu den Walzen 23, 25 verlaufenden Stab auf, an dem federnde, voneinander durch Zwischenräume getrennte Zinken 37a befestigt sind, die beispielsweise durch Stifte aus Federstahldraht gebildet sind. Die freien Enden der Zinken liegen am Förderband 21 an.

Nun soll anhand der Figuren 3 und 4 die Ausbildung des Förderbandes 21 näher erläutert werden. Das endlose Förderband 21 besteht aus einem Grundband 41 mit einer glatten Aussenfläche und einem auf dieser aufgebrachten Mitnehmer-Band 43. Beide Bänder 41, 43 bestehen aus einem gummielastischen Material. Das Mitnehmer-Band 43 ist aussen mit über seine Länge verteilten, parallel zu den Walzen-Drehachsen verlaufenden, sich über seine ganze Breite erstreckenden Mitnehmern 43a versehen, die in den Figuren 1, 2 und 4 zur Verdeutlichung mit übertriebenen Grössen und Abständen gezeichnet wurden. Die Mitnehmer 43a sind bezüglich des Grundbandes von ihren Wurzeln zu ihren freien Rändern hin in der Förder-Richtung 33 geneigt und bilden also eine Art Schaufeln, die im Bereich des Förderband-Abschnittes 21a dem Behälter-Innenraum 17 zugewandt sind.

Die horizontal und rechtwinklig zu den beiden Behälter-Wänden 15a, und also parallel zu den Drehachsen der Walzen 23, 25 gemessene Breite des Behälter-Innenraumes ist in den Figuren 2 und 4 mit a bezeichnet. Die Breite des Grund-Bandes 41 ist so bemessen, dass das Grund-Band sich mindestens annähernd über die ganze Breite des Behälter-Innenraumes 17, d.h. rechtwinklig von einer Wand 15a zur andern Wand 15a, erstreckt. Die parallel zur Breite a gemessene Breite b des Mitnehmer-Bandes ist dagegen kleiner als die Hälfte der Innenraum-Breite a des Behälters 15 und beträgt beispielsweise etwa einen Drittel der Breite a. Das Mitnehmer-Band 43 ist jedoch derart auf das Grund-Band 41 aufgebracht, dass es nicht parallel zu den Längsrändern des Grund-Bandes 41, sondern gewissermassen entlang einem geschlossenen Zick-Zack-Weg verläuft. Der sich in der Figur 4 am nächsten bei der linken Wand 15a befindende Abschnitt des Mitnehmer-Bandes 43 ist mit 43b und der sich am nächsten bei der rechten Wand 15a befindende Abschnitt mit 43c bezeichnet. Die beiden Abschnitte 43b, 43c sind in der Längs- bzw. Umfangsrichtung des Förderbandes um die halbe Förderbandlänge voneinander entfernt. Aufeinanderfolgende Mitnehmer 43a sind also im allgemeinen in der Richtung der Walzen-Drehachsen, in der auch die Breiten a und b gemessen werden, gegeneinander versetzt. Wenn alle Mitnehmer 43a des Mitnehmer-Bandes betrachtet werden, erstrecken sich diese insgesamt über die in der Figur 4 mit c bezeichnete Breite. Da die Förderwirkung des Förderbandes 21 durch die Mitnehmer 43a verursacht wird, ist also das Förderband 21, wenn es einen vollen Umlauf ausführt, über die Breite c förderwirksam. Diese förderwirksame Breite c sollte mindestens etwa zwei Drittel und vorteilhafterweise mindestens drei Viertel der in der gleichen Richtung gemessenen Breite a des Behälter-Innenraums 17 betragen.

Ein Auffänger 51 ist unterhalb des Förderbandes 21 am Gestell 1 befestigt, so dass er also den Lastträger 9 der Waage 5 nicht belastet. Der Auffänger 51 bildet eine in der Figur 1 auf die rechte Seite hin nach unten geneigte Gleit-Rinne für die beim Betrieb vom Förderband 21 abgeworfenen Fasern. Der Auffänger 51 erstreckt sich auf der linken Seite bis unter den Boden 15c oder mindestens bis unter die Lippe 35. Eine starr mit dem Auffänger 51 verbundene und oberhalb von diesem angeordnete Haube 53 deckt das Förderband 21 gegen den Aussenraum derart ab, dass alle vom Förderband abgeworfenen Fasern auf den Auffänger gelangen. Die vom Auffänger 51 gebildete Gleit-Rinne ragt in den Figuren 1 und 2 auf der rechten Seite unter dem untern Rand der Haube 53 heraus und bildet einen Auslass 55 für das faserige Gut.

Die Einrichtung weist ferner noch eine in einem separaten Gerät untergebrachte Elektronik-Einheit 57 auf, die durch Kabel mit der Waage 5 und dem Motor 29 verbunden ist. Die Elektronik-Einheit 57 enthält unter anderem eine Anzeigevorrichtung zur digitalen Anzeige der Förderleistung, d.h. der pro Zeiteinheit geförderten Fasermenge, Bedienungselemente zum Einstellen des Sollwertes der Förderleistung sowie anderer Betriebsparameter und elektronische Bauelemente zum Verarbeiten der von der Waage 5 gelieferten Mess-Signale sowie zum Regeln des Motors 29.

-9-

Die Einrichtung kann beispielsweise verwendet werden, um Glasfasern für die Herstellung von faserverstärktem Kunststoff zu fördern und zu dosieren. Eine diesem Zweck dienende Anlage weist zusätzlich zu der in der Zeichnung dargestellten Einrichtung eine Plastifiziervorrichtung und Mittel auf, um die beim Auslass 55 austretenden Glasfasern kontinuierlich in die Plastifiziervorrichtung einzuführen. In der etwa eine Schnecke aufweisenden Plastifiziervorrichtung werden die Fasern dann mit dem ebenfalls kontinuierlich zugeführten Kunststoff vermischt.

Beim Betrieb der Einrichtung wird von Zeit zu Zeit ein Vorrat des zu verarbeitenden faserigen Gutes in den Behälter-Innenraum 17 eingefüllt. Die jeweils eingefüllte Menge wird dabei so bemessen, dass der sich beim Abstreifer 37 und oberhalb von diesem befindende Teil des Innenraums 17 frei bleibt. Wenn nun das Förderband 21 durch den Motor 29 bewegt wird, fassen die gegen den Behälter-Innenraum 17 vorstehenden Mitnehmer 43a des Förderband-Abschnittes 21a Fasern und transportieren diese in der Förder-Richtung 33 nach oben. Beim oder nach dem Passieren der oberen Walze 25 werden diese Fasern vom Förderband abgeworfen, fallen dann auf den Auffänger 51 und gleiten zum Auslass 55. Wenn die Fasern vom Förderband abgeworfen werden, nimmt die den Lastträger 9 der Waage 5 belastende Masse entsprechend ab. Die Belastung des Lastträgers wird in einstellbaren Zeitabständen von beispielsweise einigen Sekunden periodisch gemessen. Aus diesen Messwerten wird in der Elektronik-Einheit die Förderleistung, d.h. die pro Zeiteinheit geförderte Fasermenge ermittelt und angezeigt, wobei die Anzeige beispielsweise in Gramm pro Stunde oder Kilogramm pro Stunde erfolgen kann. Ferner regelt die Elektronik-Einheit den Motor 29 derart, dass die Förderleistung einem vorgängig eingestellten Sollwert

-10-

entspricht. Die Regelschaltung enthält im übrigen Mittel, die beim Nachfüllen von Fasermaterial oder andern kurzzeitigen Störungen gewährleisten, dass die Förderleistung konstant bleibt.

Der im Behälter-Innenraum 17 vorhandene Faser-Vorrat erzeugt infolge des Eigengewichts der Fasern einen Druck, der von oben nach unten zunimmt. Da sich der dem Behälter-Innenraum 17 zugewandte Förderband-Abschnitt 21a von schräg unten nach oben bewegt, werden also die Fasern bei der obersten Stelle des Faser-Vorrats, d.h. bei der Stelle mit dem kleinsten Faser-Druck, aus dem Faser-Vorrat heraustransportiert. Weil das Förderband 21 die Fasern aufwärts aus dem Behälter-Innenraum 17 heraustransportiert und weil sich zudem der Behälter-Innenraum 17 von unten nach oben in der rechtwinklig zu den Walzen-Drehachsen gemessenen Horizontalrichtung noch erweitert, bilden die vom Förderband transportierten Fasern praktisch keine Klumpen. Sollten sich aber trotzdem, etwa wegen elektrostatischen Aufladungen, einzelne Klumpen bilden, so werden diese durch den Abstreifer 37 abgestreift sowie eventuell gleichzeitig entladen und fallen dann wieder zum Faser-Vorrat zurück. Von den Mitnehmern gehaltene, einzelne Fasern werden dagegen im allgemeinen durch den Abstreifer nicht abgestreift und gelangen in der vorher beschriebenen Weise zum Auslass 55. Die Lippe 35 schliesst den zwischen dem Boden 15c und dem Förderband 21 vorhandenen Spalt für Fasern einigermassen dicht ab. Falls trotzdem gelegentlich Fasern nach unten fallen sollten, gelangen diese gleich den vom Förderband geförderten Fasern auf den Auffänger 51, wo sie den Lastträger 9 nicht mehr belasten, und gleiten dann zum Auslass 55.

Die in den Figuren 1 bis 4 der Zeichnung dargestellte

-11-

Einrichtung ist insbesondere gut dazu geeignet, Fasern
mit relativ kleinen Förderleistungen im Bereich von
0,5 bis 10 kg/h kontinuierlich und praktisch klumpenfrei zu fördern und zu dosieren. Wenn die Einrichtung
für so kleine Förderleistungen konzipiert wird, sind
aber bei der Dimensionierung einige Punkte von Bedeutung, die nun näher diskutiert werden sollen.

Damit die Fasern im Behälter-Innenraum zwischen den zwei
Wänden 15a keine zusammenhängenden Brücken bilden, sollten die Behälterwände 15a gewisse Mindestabstände
haben. Versuche mit Glasfasern haben gezeigt, dass die
horizontal und parallel zur Förderband-Oberfläche
gemessene Breite a mindestens etwa das Zwanzigfache der
Faserlänge betragen sollte. Bei einer Faserlänge von
6 mm sollte also die Breite a mindestens 120 mm und
vorzugsweise etwa 150 mm oder mehr betragen. Der
Abstand zwischen der Wand 15b und dem Förderband-Abschnitt 21a sollte zweckmässigerweise ebenfalls
mindestens gleich gross wie die Breite a, und vorzugsweise mindestens doppelt so gross wie diese sein.

Die Ausbildung der Mitnehmer 43a des Förderbandes 21
ist ebenfalls in gewissen Grenzen auf die Faserabmessungen abzustimmen. Im vorliegenden Fall ist die Höhe
der Mitnehmer 43a ungefähr gleich der halben Faserlänge.

Damit man trotz einer kleinen vorgesehenen Förderleistung mit nicht allzu kleinen Geschwindigkeiten des
Förderbandes arbeiten muss, wurde die Breite b des
Mitnehmer-Bandes 43, über die sich die Mitnehmer 43a,
wie beschrieben, erstrecken, wesentlich kleiner gemacht
als die Breite a. Bei einem vollen Umlauf des Förderbandes 21 ist dieses aber trotzdem über die Breite c förderwirksam, die nur relativ wenig kleiner ist als die Breite a. Obschon also die Breite b relativ klein ist, werden trotzdem annähernd über die ganze Breite a gleichmässig Fasern aus dem Faser-Vorrat abtransportiert.

Die Einrichtung kann ohne weiteres auch für grössere Förderleistungen, beispielsweise für Förderleistungen von 50 bis 200 kg/h und mehr konzipiert werden. In solchen Fällen können die Abmessungen des Behälters, und insbesondere die Breite a, nach Bedarf vergrössert werden. Dementsprechend können dann auch die Abmessungen des Förderbandes vergrössert werden. Insbesondere kann dann die Breite b, über die sich die Mitnehmer erstrecken, über die ganze Länge des Förderbandes annähernd gleich der Breite a gemacht werden, so dass es nicht mehr notwendig ist, die Mitnehmer quer zur Förderrichtung gegeneinander zu versetzen.

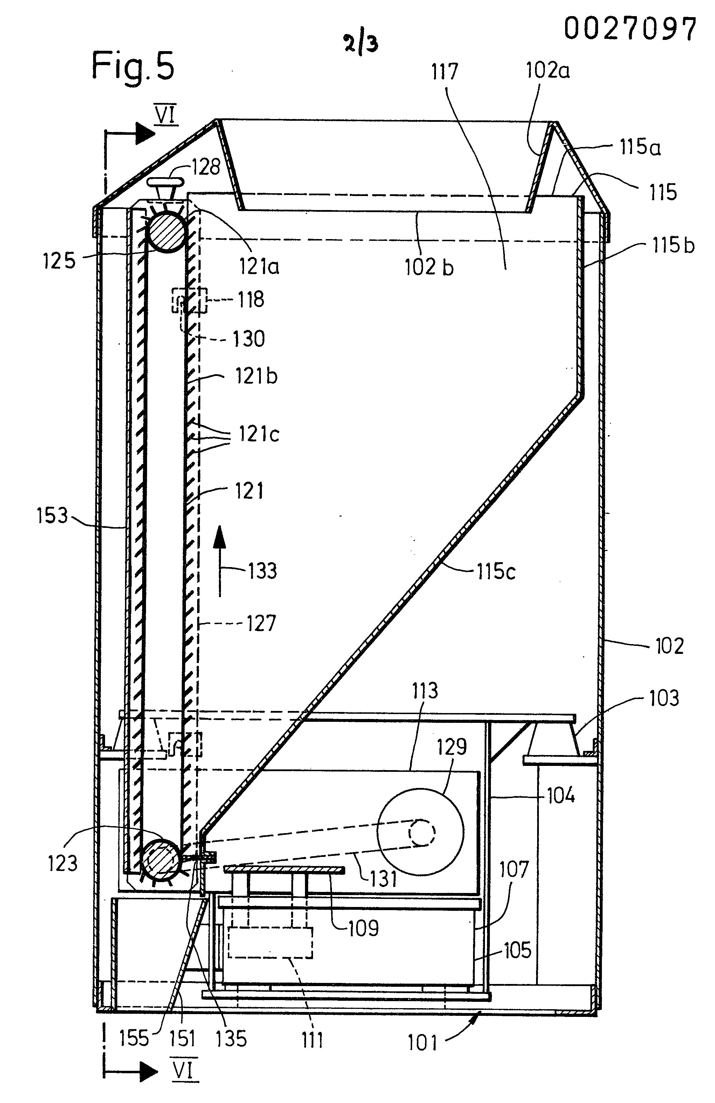

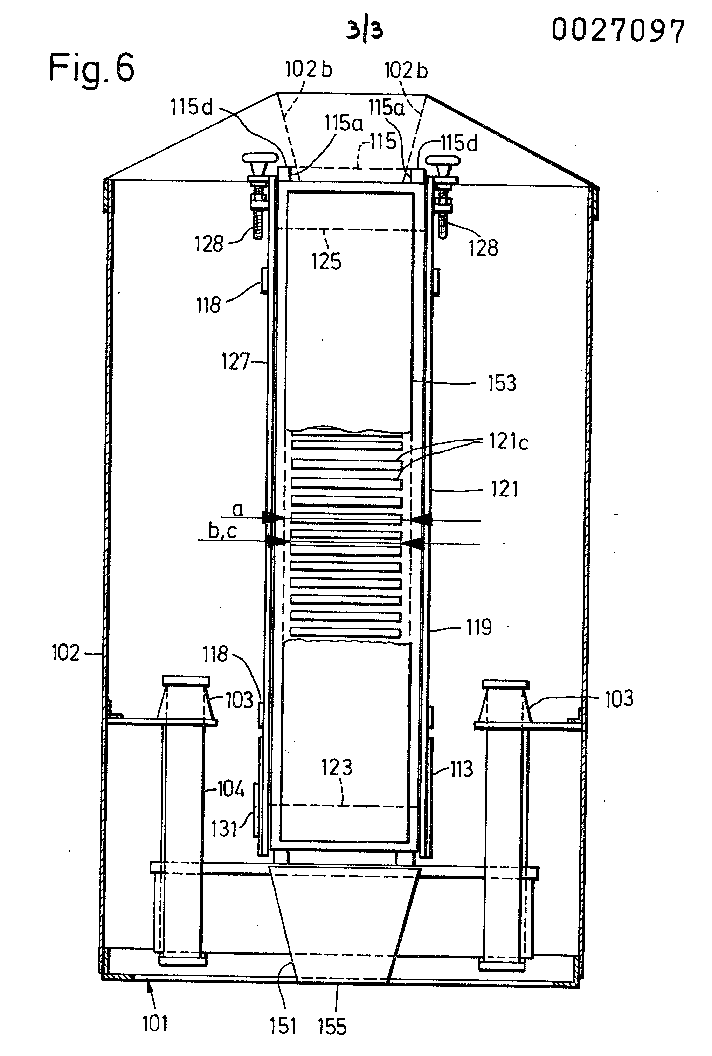

Die in den Figuren 5 und 6 dargestellte Einrichtung weist ein Gestell 101 mit einem daran befestigten Gehäuse 102 auf. Am Gestell 101 ist mittels Schwingungsdämpfer-Elementen 103 und einer Aufhängevorrichtung 104 eine Waage 105, oder genauer gesagt, deren Gehäuse 107 befestigt. Der bewegbar gehaltene Lastträger 109 der Waage 105 ist mit deren Last-Messwandler 111 verbunden. Der letztere weist Mittel zur Erzeugung elektrischer Signale auf, die ein Mass für die Grösse der angreifenden Last geben und ist elektrisch mit einer der Elektronik-Einheit 57 entsprechenden Elektronik-Einheit verbunden. Am Lastträger 111 ist ein unter anderem zwei vertikale Platten aufweisender, ein wenig vereinfacht dargestellter Support 113 starr befestigt. Dieser hält ein Bandchassis 127, das zwei vertikal nach oben verlaufende

-13-

Seitenplatten aufweist, die durch Streben miteinander verbunden sind. Ein Förderband 121 ist mit zwei bei den beiden Enden des Bandchassis 127 gelagerten Walzen 123, 125 gehalten. Die Lager der sich beim oberen Ende des Bandchassis 127 befindenden Walze 125 sind dabei mit zwei Stellschrauben 128 in vertikaler Richtung verstellbar. Die untere Walze 123 ist durch ein Riemen- oder Kettengetriebe 131 mit der Abtriebswelle eines am Support 113 befestigten Elektromotors 129 verbunden.

Ein oben offener Behälter 115 wird auf zwei einander abgewandten Seiten durch Wände 115a begrenzt, von denen mindestens die Hauptteile eben sind und vertikal sowie parallel zueinander verlaufen. Auf der sich in der Figur 5 rechts befindenden Seite ist der Behälter im oberen Teil durch eine vertikale, ebene Wand 115b begrenzt, die rechtwinklig zu den beiden Wänden 15a und also parallel zu den Hauptabschnitten der beiden Förderband-Trümer verläuft. Der Boden 115c des Behälters ist vom untern Ende der Wand 115b weg schräg nach unten geneigt, wobei der Winkel zwischen einer Horizontalebene und dem Boden mindestens $30^\circ$ und beispielsweise ungefähr $45^\circ$ beträgt. Die sich auf der linken Seite der Figur 5 befindenden Vertikalränder der Wände 115a ragen zwischen die beiden vertikalen Seitenplatten des Bandchassis 127 hinein und sind mit nach aussen abgewinkelten Flanschen 115d versehen. Diese Flansche 115d sind auf ihren dem Förderband 121 zugewandten Seiten mit Dichtungsstreifen versehen und liegen an der dem Behälter 115 zugewandten breitseite des ebenen, vertikal nach oben verlaufenden Abschnittes 121b des einen Förderband-Trums 121a an. Der Behälter ist bei den Flanschen 115d mit Haken 118 versehen und an Stiften 130 des Bandchassis 127 angehängt. Der Boden 115c des Behälters 115 erstreckt sich bis in die Nähe des unteren Endes des ebenen Förderband-Abschnittes 121b und weist dort einen horizontal nach aussen abgewinkelten Flansch auf. An diesem ist eine hozontal verlaufende Dichtung 135 mit einer am Förderband anliegenden Lippe befestigt. Der Behälter 117 begrenzt also zusammen mit dem sich oberhalb der Dichtung 135 befindenden, ebenen Abschnitt 121b des einen Förderband-Trums 121a einen Innenraum 117 zum Aufnehmen eines faserigen Gutes.

Das Gehäuse 102 ist oben mit nach innen abgewinkelten Leitplatten 102a, 102b versehen, die eine trichterförmig in den Behälter-Innenraum 117 hineinmündende Einfüll-Öffnung für das faserige Gut begrenzen.

Das Förderband 121 besteht aus Kunststoff und weist ein ebenes Grund-Band auf, dessen Breite mindestens annähernd gleich der Breite des zwischen den beiden Seitenplatten des Bandchassis 127 vorhandenen Zwischenraumes ist. Auf der Aussenseite des Grund-Bandes sind mit diesem zusammenhängende Mitnehmer 121c vorhanden, deren Abmessungen und Abstände in den Figuren 5 und 6 zur Verdeutlichung mit übertriebenen Grössen dargestellt wurden und die von ihren Wurzeln weg zu ihren freien Rändern hin in der Förderrichtung 133 geneigt sind. Die Mitnehmer 121c erstrecken sich quer zur Förderbandlängsrichtung über eine Breite b, die geringfügig kleiner ist als die in der gleichen Richtung gemessene Breite a des Behälter-Innenraums 117.

Auf der dem Behälter 115 abgewandten Seite des Förderbandes 121 ist eine Haube 153 am Bandchassis 127 befestigt. Diese deckt den mit Mitnehmern versehenen Teil des dem Behälter 115 abgewandten Förderband-Trums gegen ninten und beidseitig ab, wogegen sie unten und oben offen ist und also einen vertikalen Kanal bildet. Unter der Walze 123 ist ein Auffänger 151 mit der Form eines sich von oben nach unten verjüngenden Trichters am Gestell 101 befestigt. Die sich oben befindende Einlass-Öffnung des Auffängers erstreckt sich im Grundriss mindestens über die ganze Breite des von der Haube 153 begrenzten Kanals und mindestens über den ganzen Durchmesser der unteren Walze 123. Die untere Öffnung des Auffängers 151 bildet einen Auslass 155 für das faserige Gut.

Das Gestell 101 kann beispielsweise derart an einem Kunststoff-Plastifizierorgan befestigt werden, dass sich der Auslass 155 über der Einlass-Öffnung eines eine Förder- und Plastifizier-Schnecke aufweisenden Extruders befindet.

Die in den Figuren 5 und 6 dargestellte Einrichtung arbeitet in ähnlicher Weise, wie es für die in den Figuren 1 bis 4 dargestellte Einrichtung beschrieben wurde. Insbesondere transportiert das Förderband 121 beim Betrieb Fasern von einer im Behälter-Innenraum 117 vorhandenen Menge eines faserigen Gutes nach oben aus dem Innenraum 117 heraus zum Auffänger 151. Dabei werden der Behälter 115, das Förderband 121, das Bandchassis 127 und der Motor 129 ohne Berührung des Gestells 101 oder des Gehäuses 102 vom Lastträger 109 der Waage 105 getragen, so dass also mit dieser beim Betrieb die Abnahme der im Behälter-Innenraum 117 vorhandenen Menge des faserigen Gutes ermittelt werden kann. Der Hauptunterschied der Arbeitsweise der beiden in der Zeichnung dargestellten Einrichtungen besteht darin, dass die Fasern bei der in den Figuren 5 und 6 dargestellten Einrichtung zur Hauptsache nicht schräg, sondern vertikal nach oben aus dem Behälter-Innenraum 117 herausgefördert werden.

-16-

Der Behälter 115 und die Mitnehmer 121c können ähnlich dimensioniert werden, wie es für den Behälter 15 und die Mitnehmer 43a erläutert wurde. Da die Mitnehmer 121c jedoch durch parallel zur Förderbandlängsrichtung verlaufende Randlinien begrenzt werden, ist die Breite b der Mitnehmer gleich der förderwirksamen Breite c.

Die in den Figuren 5 und 6 dargestellte Einrichtung ist daher, bei gleichen Breiten a, eher für grössere Förderleistungen vorgesehen als die in den Figuren 1 bis 4 dargestellte Einrichtung. Wenn also die Breite a beispielsweise in der Grösse von 150 mm liegt, ist die in den Figuren 5 und 6 dargestellte Einrichtung insbesondere für Förderleistungen in der Grösse von 5 bis 200 kg/h geeignet.

Es ist jedoch ohne weiteres möglich, auch die in den Figuren 5 und 6 dargestellte Einrichtung mit einem dem Förderband 21 entsprechenden Förderband auszustatten, bei dem die Mitnehmer-Breite b kleiner ist als die förderwirksame Breite c. Dann ist auch die in den Figuren 5 und 6 dargestellte Einrichtung ohne weiteres für Förderleistungen bis hinab zu etwa 0,5 kg/h und weniger verwendbar.

Die Einrichtung kann selbstverständlich noch in anderer Weise modifiziert werden. Beispielsweise können Elemente der beiden in der Zeichnung dargestellten Einrichtungen in verschiedener Weise miteinander kombiniert werden.

Ferner kann nötigenfalls ein Vibrator vorgesehen werden, um den Auffänger 51 bzw. 151 zu vibrieren und das Herabgleiten der Fasern zu fördern.

Bei den beschriebenen Ausführungsbeispielen ist der geradlinige, sich auf der Innenseite des Behälters befindende Förderband-Abschnitt entweder nach oben von der gegenüberliegenden Behälterwand weggeneigt oder vertikal. Der Winkel α zwischen dem genannten Förderband-Abschnitt und einer horizontalen Ebene liegt bei diesen Ausführungsbeispielen zwischen 45 und 90°.

Das Förderband könnte aber auch so angeordnet werden, dass ein dem Behälter-Innenraum zugewandter Förderband-Teil-Abschnitt nach oben gegen die gegenüberliegende Wand des Behälters hin geneigt ist. Der dem Winkel α der Figur 3 entsprechende Winkel könnte dann etwa im Intervall von 90 bis 135° liegen. Damit die Fasern auf der Aussenseite des Behälters dann trotzdem gut abgeworfen würden, könnte das Förderband mit drei statt nur mit zwei Walzen geführt werden, wobei diese drei Walzen dann derart angeordnet würden, dass der sich abwärts bewegende Förderband-Abschnitt vertikal verlaufen würde oder ähnlich wie in der Figur 1 geneigt wäre.

Des weitern könnte man als Förderorgan statt eines Förderbandes auch ein Rad vorsehen, dessen Umfangsfläche mit vorstehenden Mitnehmern versehen ist und von dem ein Teil der Umfangsfläche dem Behälter-Innenraum zugewandt ist und die Funktion der Förderbänder 21, 121 ausführen kann.

Ferner wäre es möglich, die Waage 5 bzw. 105 wegzulassen, d.h. auf eine gewichtsmässige Dosierung zu verzichten und den Behälter 15 bzw. 115 starr am Gestell 1 zu befestigen. In diesem Fall könnte die Geschwindigkeit des Förderorganes auf einen konstanten Wert eingestellt werden, was ebenfalls noch eine volumenmässig einigermassen konstante Förderleistung ergäbe. Es wäre aber auch möglich, das beim Auslass austretende Gut über eine Bandwaage zu führen und mit dieser den Motor 29 bzw. 129 zu regeln.

0027097

-1-

<u>K-Tron Soder AG</u>, Niederlenz (Schweiz)

<u>PATENTANSPRÜCHE</u>

1. Einrichtung zum Fördern, und insbesondere Dosieren, eines faserigen Gutes, mit einem Behälter (15, 115), der einen Innenraum (17, 117) zum Aufnehmen des faserigen Gutes aufweist, einem Förderorgan (21, 121) und Halte- sowie Antriebsmitteln (27, 29, 31, 127, 129, 131) zum Halten und Antreiben des Förderorganes (21, 121), so dass dieses beim Betrieb faseriges Gut aus dem Behälter (15, 115) abtransportiert, dadurch gekennzeichnet, dass der Behälter-Innenraum (17, 117) auf einer Seite mindestens teilweise durch einen Abschnitt (21a, 121b) des Förderorganes (21, 121) begrenzt ist, dass das Förderorgan (21, 121b) mit Mitnehmern (43a, 121c) versehen ist, die beim genannten Förderorgan-Abschnitt (21a, 121b) dem Behälter-Innenraum (17, 117) zugewandt sind, und dass die Antriebsmittel (29, 31, 129, 131) derart ausgebildet sind, dass der dem Behälter-Innenraum (17, 117) zugewandte Förderorgan-Abschnitt (21a, 121b) beim Betrieb faseriges Gut nach oben aus dem Behälter-Innenraum (17, 117) herausfördert.

2. Einrichtung nach Anspruch 1, dadurch gekennzeichnet, dass mindestens ein Teil-Abschnitt (21b) des genannten, dem Behälter-Innenraum (17, 117) zugewandten Förderorgan-Abschnittes (21a, 121b) mit einer Horizontalebene einen Winkel ($\alpha$) von 45 bis 135$^{\circ}$ bildet.

3. Einrichtung nach Anspruch 1 oder 2, dadurch gekennzeichnet, dass mindestens ein Teil-Abschnitt des genann-

<u>15698</u>
Zb/ro/Fall 3

0027097

-2-

ten, dem Behälter-Innenraum (117) zugewandten Förderorgan-Abschnittes (121b) ungefähr vertikal verläuft.

4. Einrichtung nach einem der Ansprüche 1 bis 3, dadurch gekennzeichnet, dass die Mitnehmer (43a, 121c) des Förderorganes (21, 121) bei einem vollen Umlauf von diesem in horizontaler Richtung gemessen über eine Breite (c) förderwirksam sind, die mindestens zwei Drittel der in der gleichen Richtung gemessenen Breite (a) des Behälter-Innenraumes (17, 117) beträgt.

5. Einrichtung nach Anspruch 4, dadurch gekennzeichnet, dass die Mitnehmer (43a) in der Messrichtung der förderwirksamen Breite (c) an jeder Stelle des Förderorganes (21) nur eine Breite (b) einnehmen, die kleiner ist als die Breite (c), über die sie bei einem vollen Umlauf des Förderorganes (21) förderwirksam sind, und dass in der Messrichtung der förderwirksamen Breite (c) gegeneinander versetzte Mitnehmer (43a) vorhanden sind.

6. Einrichtung nach einem der Ansprüche 1 bis 5, dadurch gekennzeichnet, dass das Förderorgan ein Förderband (21, 121) ist und dass zum Halten des Förderbandes (21, 121) zwei sich in verschiedener Höhe befindende Walzen (23, 25, 123, 125) vorhanden sind.

7. Einrichtung nach einem der Ansprüche 1 bis 6, dadurch gekennzeichnet, dass der Behälter (15, 115) unten durch einen Boden (15c, 115c) begrenzt ist, der von der dem Förderorgan (21, 121) gegenüberstehenden Behälter-Wand (15b, 115b) zum Förderorgan (21, 121) hin nach unten geneigt ist, und dass sich der dem Behälter-Innenraum (17, 117) zugewandte Förderorgan-Abschnitt (21a, 121b) bis zur tiefsten Stelle des Bodens (15c, 115c) erstreckt.

-3-

8. Einrichtung nach einem der Ansprüche 1 bis 7, dadurch gekennzeichnet, dass eine Waage (5, 105) mit einem Lastträger (9, 109) vorhanden ist, der den Behälter (15, 115) und das Förderorgan (21, 121) trägt.

9. Einrichtung nach Anspruch 8, dadurch gekennzeichnet, dass ein Gestell (1, 101), mit dem die Waage (5, 105) verbunden ist, und ein Auffänger (51, 151) zum Auffangen und Weiterleiten des vom Förderorgan (21, 121) geförderten faserigen Gutes vorhanden sind, und dass der Auffänger (51, 151), ohne Wirkverbindung mit dem Lastträger (9, 109), am Gestell (1, 101) befestigt ist.

10. Einrichtung nach einem der Ansprüche 1 bis 9, dadurch gekennzeichnet, dass im Behälter-Innenraum (17) in der Nähe des oberen Ende des dem Behälter-Innenraum (17) zugewandten Förderorgan-Abschnittes (21a) ein rechenartiger Abstreifer (37) mit federnden Zinken (37a) vorhanden ist, deren freie Enden dem Förderorgan (21) zugewandt sind.

Fig.1

Fig.2

Fig.3

Fig.4

0027097

Fig.5

Fig. 6